# FASCICULE DE BREVET EUROPEEN

(11) **EP 1 714 110 B1**
(45) Date de publication et mention de la délivrance du brevet: **20.08.2014**
(21) Numéro de dépôt: 04816612.8
(22) Date de dépôt: 30.12.2004
(51) Int. Cl.: B07C 1/16, B65H 43/08, G01B 11/06

(54) **PROCEDE ET DISPOSITIF POUR MESURER L'EPAISSEUR D'ARTICLES DE COURRIER**
VERFAHREN UND VORRICHTUNG ZUR MESSUNG DER DICKE EINES POSTSTÜCKS
METHOD AND APPARATUS FOR MEASURING A MAILPIECE THICKNESS

(30) Priorité: 03.02.2004 FR 0450193
(43) Date de publication de la demande: 25.10.2006
(73) Titulaire: Solystic, 92220 Bagneux (FR)
(72) Inventeur: DIAN, Jean-Raoul, 91600 Savigny sur Orge (FR); TELUOB, Jean-Marc, F-07130 CORMAS (FR)
(74) Mandataire: Prugneau, Philippe
(86) Numéro de dépôt international: PCT/FR2004/050765
(87) Numéro de publication internationale: WO 2005/085752

(56) Documents cités:
- EP-A- 0 816 931
- DE-A- 19 959 570
- US-A- 4 937 460
- US-B1- 6 644 649

## Description

### Domaine technique

L'invention concerne un procédé pour mesurer par réflexion d'un rayon laser l'épaisseur d'un article de courrier plat.

L'invention s'applique plus particulièrement à la mesure d'épaisseur d'articles de courrier plats qui sont déplacés en série sur chant à grande vitesse dans une installation de tri postal. La mesure précise de l'épaisseur de ces articles de courrier est primordiale pour réaliser différents traitements conduisant au tri tels que la ségrégation de format des articles de courrier, la vérification du montant de l'affranchissement ou encore le contrôle du remplissage des bacs ou des tasseurs dans les sorties de tri de l'installation de tri postal.

Dans une installation de tri postal, la mesure de l'épaisseur des articles de courrier doit se faire en temps réel avec comme contraintes que les articles de courrier ont des tailles et donc des épaisseurs très diverses (140 à 400 mm de longueur et 0 à 32 mm d'épaisseur). De plus, ces articles de courrier sont déplacés à très grandes vitesses, les vitesses courantes atteignant les quatre mètres par seconde.

### Technique antérieure

On connaît déjà plusieurs techniques pour mesurer l'épaisseur d'articles de courrier plats en mouvement dans une machine de tri postal.

Une technique connue est la réflexion laser qui consiste à envoyer deux rayons laser respectivement sur les deux faces opposées de chaque article de courrier, au moyen de deux cellules laser situées face à face de part et d'autre du trajet de convoyage des articles de courrier. Le temps de réflexion des rayons laser sur les faces opposées de l'article de courrier sert de grandeur physique pour la mesure différentielle de l'épaisseur de l'article de courrier. Cette technique de mesure permet de mesurer uniquement l'épaisseur apparente de chaque article de courrier. En effet, un grand nombre d'articles de courrier se présentent sous enveloppe en plastique et au passage de ces articles de courrier entre les deux cellules laser, l'enveloppe de chaque article de courrier peut se gonfler ou se déformer de sorte que l'épaisseur apparente mesurée pour cet article de courrier peut différer de façon très importante de son épaisseur réelle ce qui induit des erreurs dans les traitements tels que la ségrégation de format, la vérification de l'affranchissement ou encore le contrôle du remplissage des bacs en sortie de tri. De plus, cette technique est très dépendante de la nature et de la qualité de la surface extérieure de chaque article de courrier sur laquelle est réfléchi le rayon laser. On a constaté que la mesure par réflexion laser sur certains articles de courrier à surface extérieure en plastique foncé donne des résultats totalement aberrants.

Une autre technique connue repose sur l'utilisation de palpeurs mécaniques. L'article de courrier entraîné par deux bandes de convoyage parallèles motorisées passe entre deux palpeurs. Le déplacement des palpeurs par rapport à leur position de repos sert de grandeur physique pour la mesure de l'épaisseur de chaque article de courrier. Ces palpeurs sont généralement montés sur des axes verticaux et sont reliés mécaniquement à un capteur de mesure de déviation angulaire. Ce type de capteurs ne convient pas pour la mesure de l'épaisseur d'articles de courrier déplacés à grande vitesse sauf à disposer de palpeurs construits avec des matériaux ultra légers, très coûteux et peu résistants aux contraintes mécaniques. De plus, le frottement des palpeurs sur des articles de courrier fragiles, par exemple des articles de courrier sous enveloppe en plastique très fine, peut entraîner la dégradation de ces derniers.

La publication EP 0 816 931 décrit un dispositif de mesure de caractéristiques physiques d'objets plats pour copieur et imprimante. Ce dispositif de mesure comprend un élément flexible, dont la base est montée fixe et solidaire d'un support, et dont l'extrémité libre, en contact avec les objets plats convoyés, fléchie en fonction notamment de l'épaisseur de chaque objet plat. La flexion de cette extrémité libre peut être détectée au moyen d'un flux lumineux projeté par le dessous sur cette extrémité libre et dont le flux réfléchi est capté par un détecteur de position. L'inclinaison de l'élément flexible et donc la position du flux lumineux réfléchi sur le détecteur de position, varient en fonction de l'épaisseur de chaque objet plat. L'épaisseur de l'objet plat peut ainsi être déterminée en fonction de la flexion de l'élément flexible.

La publication DE 199 59 570 décrit un dispositif de mesure d'épaisseur comprenant une bille appliqué contre d'un article plat à mesurer. Le déplacement selon Z de la bille est contrôlé pour déterminer l'épaisseur de l'article plat. La bille est mobile de sorte à pouvoir suivre le déplacement de l'article plat selon les directions X et Y.

La publication US 4,937,460 décrit un dispositif de mesure d'épaisseur comportant un bras pivotant dont l'inclinaison est contrôlée au moyen d'un flux lumineux afin d'en déduire l'épaisseur de l'article plat. Le bras pivotant est sollicité contre l'article par une languette élastique.

La publication US 6,644,649 décrit un dépileur avec mesure d'épaisseur comportant des lasers disposés de part et d'autre du plan de passage des articles plats pour mesurer la distance entre l'article plat et un axe de référence.

Les techniques de mesure connues sont donc peu fiables, coûteuses et imprécises, donnant parfois lieu à des aberrations et engendrant des erreurs de traitement dans une installation de tri postal.

### Exposé de l'invention

Le but de l'invention est de remédier aux inconvénients présentés ci-dessus en proposant un procédé de mesure de l'épaisseur réelle d'un article de courrier plat ne détériorant pas l'article de courrier, présentant un temps de réponse très rapide et une fiabilité améliorée quelle que soit la nature de l'article de courrier.

A cet effet, l'invention a pour objet un procédé pour mesurer par réflexion d'un rayon laser, l'épaisseur d'un article de courrier plat s'étendant et se déplaçant dans une machine de tri selon une direction longitudinale, caractérisé en ce qu'il comprend les étapes suivantes :
- on pince l'article de courrier plat à l'aide d'un organe élastiquement déformable qui est monté mobile selon la direction longitudinale et dont le mouvement accompagne le déplacement de l'article de courrier plat, cet organe présentant une zone ayant une première surface en contact avec une face dudit article de courrier plat et une seconde surface réfléchissante sensiblement parallèle à ladite première surface, et
- on dirige le rayon laser sur la zone de ladite seconde surface réfléchissante sensiblement parallèle à la zone de la première surface en contact et, perpendiculairement à la direction longitudinale, en vue de mesurer l'épaisseur de l'article de courrier plat.

Cet organe élastiquement déformable peut consister dans une bande de convoyage ayant une face réfléchissante ou une ligne réfléchissante sur la face opposée à la face en contact avec l'article de courrier plat.

De préférence selon l'invention, ledit organe est une roue élastiquement déformable qui présente une bande annulaire de roulement en contact avec une face de l'article de courrier plat et, du côté opposé à la bande annulaire de roulement, une bande annulaire réfléchissante qui est concentrique à la bande annulaire de roulement et sur laquelle le rayon laser est dirigé pour réaliser une mesure absolue de l'épaisseur de l'article de courrier plat. Avec un tel dispositif, au contact de l'article de courrier, la bande annulaire de roulement se déforme radialement sur une distance correspondant à l'épaisseur réelle de l'article de courrier et cette distance de déformation est mesurée par réflexion laser sur la bande annulaire réfléchissante qui peut avoir une pigmentation calibrée. La mesure d'épaisseur selon l'invention est donc indépendante de la nature et de la qualité de la surface extérieure de l'article de courrier. Ce principe de mesure d'épaisseur sans contact est particulièrement adapté pour mesurer en temps réel l'épaisseur d'articles de courrier déplacés en série sur chant à grande vitesse dans une machine de tri postal qui est déjà équipée de détecteurs de passage des articles de courrier. Ces détecteurs de passage serviront à synchroniser les mesures d'épaisseur avec le passage des articles de courrier.

Dans un dispositif conforme à l'invention, pour mesurer par réflexion d'un rayon laser l'épaisseur d'articles de courrier, l'organe élastiquement déformable est formé par deux roues élastiquement déformables disposées face à face de part et d'autre de l'article de courrier. Chaque roue élastiquement déformable présente une bande annulaire de roulement et, du côté opposé à la bande annulaire de roulement, une bande annulaire réfléchissante qui est concentrique à la bande annulaire de roulement. Les bandes annulaires de roulement des deux roues élastiquement déformables sont en contact respectivement avec les deux faces opposées de l'article de courrier plat et deux rayons laser sont dirigés respectivement sur les bandes annulaires réfléchissantes des deux roues élastiquement déformables pour réaliser une mesure différentielle.

Un tel dispositif de mesure à une ou deux roues élastiquement déformables peut présenter en outre les particularités suivantes :
- chaque rayon laser est conduit dans un tube coudé comportant des miroirs à l'intérieur ce qui permet d'installer la cellule laser à une distance suffisante de la zone de réflexion du rayon laser dans un but d'amélioration de la précision de la mesure et en dehors de la roue en particulier pour faciliter les opérations de maintenance éventuelles.
- chaque roue élastiquement déformable est une roue à ailettes en matière élastomère, la bande annulaire réfléchissante de la roue élastiquement déformable s'étendant depuis un flanc de la roue élastiquement déformable sur une partie de la largeur de la roue élastiquement déformable qui est dépourvue d'ailettes.

### Présentation sommaire des dessins

Le procédé et le dispositif selon l'invention sont décrits plus en détail ci-après et illustrés par les dessins.
La figure 1 illustre de façon très schématique un exemple de mise en oeuvre du procédé selon l'invention avec une seule roue élastiquement déformable.
La figure 2 illustre de façon schématique un autre exemple de mise en oeuvre du procédé selon l'invention avec deux roues élastiquement déformables.
La figure 3 montre selon une vue en coupe très schématique le trajet suivi par le rayon laser dans les deux roues élastiquement déformables montrées sur la figure 2.
La figure 4 montre en vue de dessous et en perspective un dispositif selon l'invention à deux roues à ailettes élastiquement déformables pour mesurer l'épaisseur d'objets plats postaux.
La figure 5 montre en vue de dessus et en perspective le dispositif de la figure 4.
La figure 6 montre de façon schématique l'agencement d'un tube pour conduire un rayon laser entre une cellule laser et la bande annulaire réfléchissante d'une roue dans le dispositif montré sur les figures 4 ou 5.
La figure 7 illustre de façon très schématique un autre exemple de mise en oeuvre du procédé selon l'invention avec une mesure par réflexion laser sur une bande de convoyage entre deux roues élastiquement déformables.

### Description des modes de réalisation

Dans la description, on a désigné de façon générale par objet plat un article de courrier plat du type lettre ou « flat ».

Le principe selon l'invention pour mesurer par réflexion d'un rayon laser, l'épaisseur d'un objet plat qui s'étend suivant une certaine direction longitudinale consiste à pincer l'objet plat à l'aide d'un organe élastiquement déformable ayant une première surface extérieure en contact avec une face de l'objet plat et une seconde surface réfléchissante sensiblement parallèle à la première surface, et à diriger le rayon laser sur cette seconde surface réfléchissante suivant une direction sensiblement perpendiculaire à la direction longitudinale.

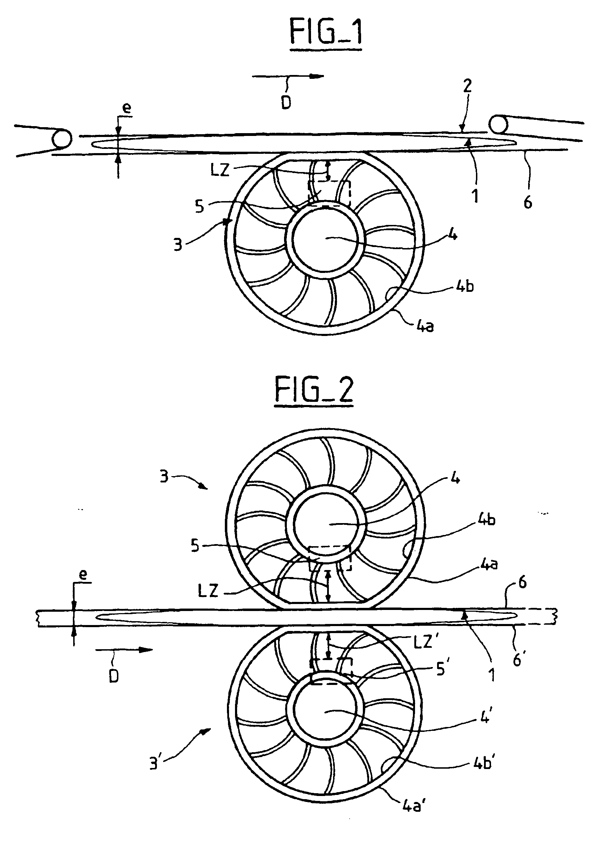

Sur la figure 1, on a représenté un exemple de mise en oeuvre du procédé selon l'invention permettant de mesurer avec une grande précision l'épaisseur d'objets plats, y compris des objets plats en mouvement. Dans cet exemple, la mesure de l'épaisseur de l'objet plat 1, qui est disposé sur chant, se fait au moyen d'une seule réflexion laser. L'objet plat 1 est pincé entre une plaque 2 fixe et une roue 3 élastiquement déformable. La roue 3 est une roue à ailettes qui est montée rotative autour d'un axe fixe 4 et on voit sur cette figure, que la roue 3 a une bande annulaire de roulement 4a qui est en contact avec une face de l'objet plat 1. On voit sur cette figure que la bande de roulement 4a est déformée radialement, sous la pression exercée par l'objet plat lorsqu'il est engagé selon la direction D entre la plaque fixe 2 et la roue 3, d'une distance e qui correspond à l'épaisseur de l'objet plat. On doit comprendre que la bande de roulement de la roue vient effleurer sans déformation la plaque de référence 2 quand aucun objet plat n'est inséré entre elles. Le procédé selon l'invention consiste à diriger un rayon laser depuis une cellule laser représentée par le bloc 5 sur la bande annulaire réfléchissante 4b qui se trouve sur la périphérie intérieure de la jante de la roue, du côté opposé à la bande de roulement 4a. Cette bande annulaire réfléchissante est calibrée pour être concentrique (parallèle) à la bande de roulement 4a de sorte qu'elle subit une déformation radiale identique à la bande de roulement lorsqu'un objet plat s'engage entre la plaque de référence et la roue élastiquement déformable. Le rayon laser LZ renvoyé par la bande annulaire réfléchissante 4b à la cellule 5 permet d'obtenir une mesure absolue de la distance de cette déformation radiale et donc de l'épaisseur réelle de l'objet plat. La mesure de l'épaisseur e de l'objet plat 1 peut se faire quand celui-ci est à l'arrêt où quand il est en mouvement. Sur la figure 1, l'objet plat 1 est déplacé selon la direction D par l'intermédiaire d'une bande convoyage 6. Dans l'agencement illustré sur la figure 1, la bande de roulement 4a de la roue 3 est en contact avec la bande 6 de manière à pincer l'objet plat 1 contre la plaque de référence 2.

Bien entendu, on comprend que le rayon laser indiqué par la flèche LZ est dirigé radialement sur la bande réfléchissante 4b c'est-à-dire perpendiculairement à la direction D où encore à la face de l'objet plat qui est en contact avec la roue 3. En particulier, le rayon laser LZ est dirigé au centre de la zone déformée (zone rectiligne) de la bande de roulement ou de la bande réfléchissante.

La figure 2 montre un autre exemple de mise en oeuvre du procédé selon l'invention avec deux roues élastiquement déformables 3,3' montées respectivement rotatives autour de deux axes fixes 4,4' en étant disposées face à face de manière à pincer entre elles l'objet plat 1. En l'absence de l'objet plat, ces deux roues se touchent sans déformation de leur jante. Une cellule laser 5 et 5' est associée à chaque roue élastiquement déformable et envoie un rayon laser LZ et LZ' sur la bande réfléchissante 4b,4b' de la roue correspondante pour réaliser une mesure différentielle d'épaisseur.

Dans cet exemple de réalisation, l'objet plat 1 peut être encore en mouvement pendant la mesure de son épaisseur. En particulier, il peut être déplacé entre deux bandes de convoyage représentées par 6 et 6' qui sont elles-mêmes pincées entre les deux roues 3 et 3'.

Comme roue élastiquement déformable, on peut utiliser une roue dite basse pression du type de celles présentées dans la demande de brevet français n°2794732 qui sont des roues à ailettes en matière élastomère élastiquement déformable.

La technique de mesure par réflexion d'un rayon laser consiste à envoyer depuis une cellule, un rayon laser sur une surface réfléchissante et à mesurer le temps mis par le rayon laser pour revenir à la cellule laser après réflexion sur ladite surface.

Une cellule laser pour la mise en oeuvre du procédé selon l'invention peut par exemple être obtenue chez la société "Baumer" dans la mesure où elle permet de mesurer avec précision, fiabilité et court temps de réponse le temps de réflexion d'un rayon laser.

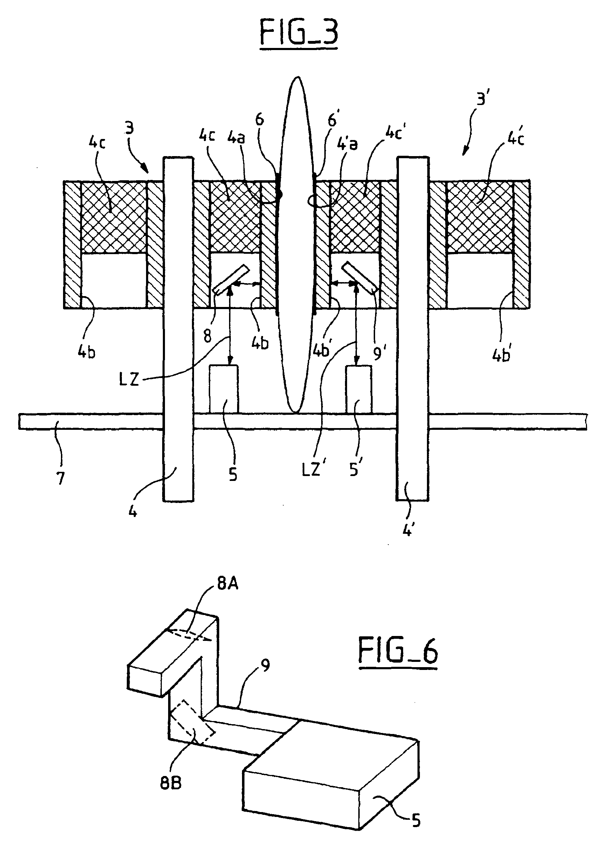

On a représenté sur la figure 3, de façon schématique en coupe, la structure de deux roues à ailettes élastiquement déformables 3,3' qui sont disposées face à face pour pincer l'objet plat 1. Sur cette figure, on a représenté deux bandes de convoyages 6,6' entre lesquelles l'objet plat est pincé. Ces deux bandes de convoyage sont pincées entre les bandes de roulement 4a,4a' des deux roues 3,3' qui peuvent être des roues motorisées. Les axes des deux roues sont fixés sur une platine 7 de part et d'autre du trajet de convoyage de l'objet plat. On voit sur cette figure les ailettes 4c,4c' dans chaque roue élastiquement déformable. On voit également que la bande annulaire réfléchissante 4b,4b' s'étend depuis un flanc d'une roue sur une partie de la largeur de la roue qui est dépourvue d'ailettes.

On voit également sur la figure 3, que dans l'espace intérieure d'une roue délimité par la bande annulaire réfléchissante, un miroir 8,8' orienté à 45° est disposé pour dévier le rayon laser LZ, LZ' radialement sur la bande annulaire réfléchissante de sorte que les cellules laser 5,5' peuvent être disposées à l'extérieur des roues élastiquement déformables.

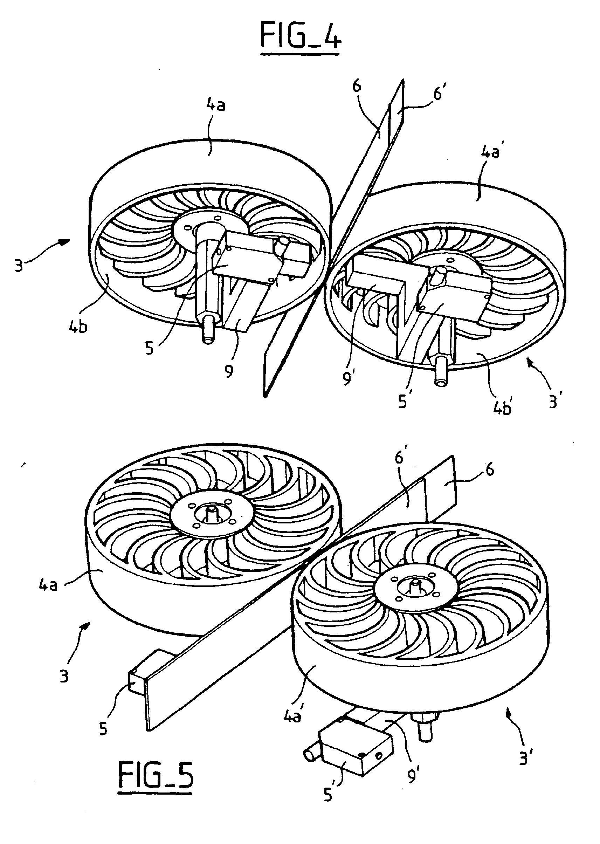

Sur les figures 4 et 5, on a représenté de façon plus précise un dispositif pour mesurer en temps réel l'épaisseur d'objets plats postaux déplacés en série sur chant par un convoyeur à bandes 6,6' d'une installation de tri postal. Dans ce dispositif, on utilise deux roues à ailettes élastiquement déformables 3,3' et deux cellules laser 5,5' qui sont disposées à l'extérieur des roues 3,3'. Chaque cellule laser envoie un rayon laser qui est guidé dans un tube coudé 9,9'. Chaque tube présente deux angles droits (plus visible sur la figure 6) où sont placés respectivement deux miroirs 8A,8B orientés à 45° pour conduire le rayon laser de la cellule vers la bande annulaire réfléchissante d'une roue et inversement. Ce tube coudé avec les miroirs permet d'augmenter le trajet du rayon laser pour tenir compte des caractéristiques de fonctionnement de la cellule laser, de protéger la cellule laser des poussières circulant dans l'environnement des roues et de disposer la cellule laser à l'extérieur des roues pour faciliter les opérations de maintenance.

Sur les figures 4 à 6, on comprend que le trajet d'un rayon laser partant d'une cellule laser est dévié à angle droit sur un premier miroir, puis de nouveau est dévié à angle droit sur un deuxième miroir avant d'être réfléchi sur la bande annulaire réfléchissante d'une roue, après quoi il suit le trajet inverse vers la cellule pour y être récupéré et traité. Ce trajet est effectué dans un tube coudé en forme de deux « L » imbriqués dans des plans perpendiculaires. Un tel tube peut être réalisé facilement par moulage d'une matière plastique.

Comme indiqué plus haut, on utilisera des détecteurs de passage généralement présents le long du trajet de convoyage des objets plats dans une installation de tri pour synchroniser les mesures d'épaisseur effectuées sur chaque objet postal.

Les roues élastiquement déformables 3,3' peuvent être fabriquées dans une matière élastomère leur conférant une bonne résistance dans le temps.

La bande annulaire réfléchissante de chaque roue est constituée par une surface en élastomère dont la pigmentation présente en elle-même des caractéristiques de réflexion suffisantes mais il est aussi possible de recouvrir cette surface en élastomère avec une peinture à plus forte capacité réfléchissante.

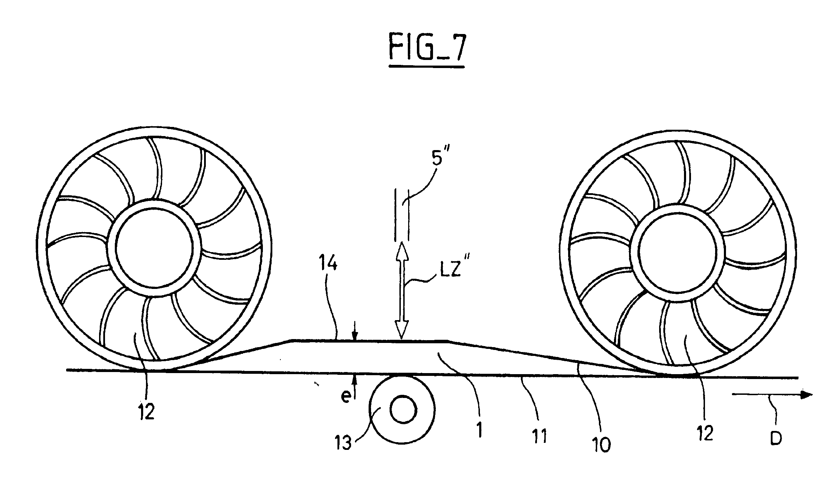

Sur la figure 7, on a représenté un autre exemple de mise en oeuvre du procédé selon l'invention dans lequel la mesure par réflexion d'un rayon laser est réalisée par l'envoi d'un rayon laser LZ" au moyen d'une cellule laser 5" (LZ" et 5" ayant des caractéristiques similaires respectivement à LZ, LZ' et à 5, 5') sur une bande de convoyage 10. L'article de courrier 1 est déplacé selon la direction D entre deux bandes de convoyage 10; 11 devant deux roues élastiquement déformables 12 ayant des caractéristiques présentées dans le brevet français N°2794732 et étant disposées du même coté du chemin de convoyage, en contact avec la bande de convoyage 10, et espacées d'une distance sensiblement identique à la longueur maximale d'un article de courrier selon la direction D. Les bandes de roulement des roues 12 ne sont pas déformées quand aucun article de courrier ne passe devant celles ci. Entre les deux roues 12, de l'autre coté des bandes de convoyage 10, 11 par rapport aux roues, est agencée une poulie de référence 13 parfaitement circulaire qui tourne autour de son centre fixe et sur laquelle vient s'appuyer la bande de convoyage 11, ainsi que la bande de convoyage 10 quand aucun article de courrier 1 ne passe entre les deux roues 12. Lorsqu'un article de courrier 1 se trouve entre les deux roues 12, il est pincé par les deux bandes de convoyage 10, 11 du fait de la pression exercée par les roues 12 sur les bandes de convoyage 10, 11, de la présence de la poulie de référence 13 qui sert de point d'appui et de la déformation élastique de la bande de convoyage 10 opposée à la poulie de référence 13. Quand l'article de courrier 1 est comprimé entre les deux bandes de convoyage 10, 11, la distance entre les deux bandes est égale à l'épaisseur e de l'article de courrier 1, qui correspond également au déplacement de la bande de convoyage 10 perpendiculairement à la direction D devant la poulie de référence 13. La mesure du déplacement de la bande de convoyage 10 est effectuée par envoi perpendiculairement au déplacement d'un rayon laser LZ" au moyen d'une cellule laser 5" sur la face 14 de la bande de convoyage 10 qui n'est pas en contact avec l'article de courrier 1. La face 14 sur laquelle est envoyé le rayon laser LZ" est faite en matière réfléchissante ou est recouverte entièrement ou partiellement (sur une bande par exemple) d'une matière réfléchissante.

La bande de convoyage 11 peut-être appuyée contre une plaque de référence non représentée ou remplacée par une plaque de référence sur laquelle glisse l'article de courrier.

L'exemple de mise en oeuvre présenté dans la figure 7, est très facile à mettre en place dans une machine de tri postal et à moindre coût.

## Revendications

1. Un procédé pour mesurer par réflexion d'un rayon laser (LZ, LZ', LZ"), l'épaisseur (e) d'un article de courrier plat (1) s'étendant et se déplaçant dans une machine de tri selon une direction longitudinale (D), **caractérisé en ce qu'**il comprend les étapes suivantes :
- on pince l'article de courrier de courrier plat (1) à l'aide d'un organe (3 ;3', 10) élastiquement déformable qui est monté mobile selon ladite direction longitudinale (D) et dont le mouvement accompagne le déplacement selon ladite direction longitudinale (D), de l'article de courrier plat (1), cet organe (3 ;3', 10) ayant une première surface (4a ; 4a') présentant une zone en contact avec une face dudit article de courrier plat (1) et une seconde surface réfléchissante (4b ; 4b'; 14) sensiblement parallèle à ladite première surface (4a ; 4a'), et
- on dirige le rayon laser (LZ, LZ', LZ") sur la zone de ladite seconde surface réfléchissante (4b; 4b', 14) sensiblement parallèle à ladite zone de ladite première surface (4a ; 4a') en contact et, perpendiculairement à ladite direction longitudinale (D), en vue de mesurer l'épaisseur de l'article de courrier plat (1).

2. Le procédé selon la revendication 1, dans lequel le rayon laser (LZ, LZ', LZ") est dirigé sur ladite seconde surface réfléchissante (4b ; 4b'; 14) suivant une direction sensiblement perpendiculaire à ladite direction longitudinale (D).

3. Un dispositif pour mesurer par réflexion d'un rayon laser, l'épaisseur (e) d'un article de courrier plat (1) s'étendant et se déplaçant dans une machine de tri selon une direction longitudinale (D), **caractérisé en ce qu'**il comporte un organe (3 ;3', 10) élastiquement déformable qui est monté mobile selon ladite direction longitudinale (D) et qui accompagne le déplacement de l'article de courrier (1) selon ladite direction longitudinale (D), cet organe (3 ;3', 10) ayant une première surface (4a ;4a') présentant une zone en contact avec une face dudit article de courrier plat (1) et une seconde surface réfléchissante (4b ;4b', 14) sensiblement parallèle à ladite première surface (4a ;4a'), et **en ce qu'**il comprend en outre une cellule laser (5) pour diriger un rayon laser (LZ, LZ', LZ") sur la zone de ladite seconde surface réfléchissante (4b ;4b', 14) sensiblement parallèle à ladite zone de ladite première surface (4a ; 4a') en contact et, perpendiculairement à ladite direction longitudinale en vue de mesurer l'épaisseur de l'article de courrier plat (1).

4. Le dispositif selon la revendication 3, dans lequel ledit organe (3 ;3') est une roue élastiquement déformable qui présente une bande annulaire de roulement (4a; 4a') en contact avec une face de l'article de courrier plat (1) et, du côté opposé à la bande annulaire de roulement (4a; 4a'), une bande annulaire réfléchissante (4b; 4b') qui est concentrique à la bande annulaire de roulement (4a; 4a') et sur laquelle le rayon laser (LZ, LZ', LZ") est dirigé.

5. Le dispositif selon la revendication 3, dans lequel ledit organe (3 ;3') est formé par deux roues élastiquement déformables disposées de part et d'autre de l'article de courrier, chaque roue élastiquement déformable (3 ;3') présentant une bande annulaire de roulement (4a ;4a') et, du côté opposé à la bande annulaire de roulement (4a ;4a'), une bande annulaire réfléchissante (4b ;4b') qui est concentrique à la bande annulaire de roulement (4a ;4a'), les bandes annulaires de roulement (4a ;4a') des deux roues élastiquement déformables (3 ;3') étant en contact respectivement avec les deux faces opposées de l'article de courrier plat (1) et, dans lequel deux rayons laser sont dirigés respectivement sur les bandes annulaires réfléchissantes (4b; 4b') des deux roues élastiquement déformables (3 ;3').

6. Le dispositif selon l'une des revendications 4 à 5, dans lequel chaque rayon laser (LZ, LZ', LZ") est conduit dans un tube coudé (9 ;9') comportant des miroirs (8A ;88) à l'intérieur.

7. Le dispositif selon l'une des revendications 4 à 6, dans lequel chaque roue élastiquement déformable (3 ;3') est une roue à ailettes en matière élastomère et dans lequel la bande annulaire réfléchissante (4b; 4b') de la roue élastiquement déformable (3 ;3') s'étend depuis un flanc de la roue élastiquement déformable (3 ;3') sur une partie de la largeur de la roue élastiquement déformable (3 ;3') qui est dépourvue d'ailettes.

8. Le dispositif selon la revendication 3, dans lequel ledit organe est formé par une bande de convoyage (10), ladite bande de convoyage (10) ayant une face en contact avec l'article de courrier plat (1) et du coté opposé à la face en contact avec l'article de courrier plat (1) une face (14) avec une surface réfléchissante sur laquelle le rayon laser (LZ") est dirigé.

9. Une machine de tri postal comprenant un convoyeur à bandes (6,6') apte à déplacer sur chant des articles de courrier plats (1) et un dispositif selon l'une des revendications 4 à 7 disposé de telle façon que la bande annulaire de roulement (4a; 4a') de chaque roue élastiquement déformable (3 ;3') est en contact avec une bande de convoyage (6; 6').

## Patentansprüche

1. Verfahren zum Messen, durch Reflektion eines Laserstrahls (LZ, LZ', LZ"), der Dicke (e) eines flachen Sendungsartikels (1), der sich in einer Sortiermaschine gemäß einer Längsrichtung (D) erstreckt und verlagert, **dadurch gekennzeichnet, dass** es die folgenden Schritte umfasst:
- Klemmen des flachen Sendungsartikels (1) mittels eines elastisch deformierbaren Organs (3; 3', 10), das gemäß der Längsrichtung (D) beweglich montiert ist und dessen Bewegung die Verlagerung des flachen Sendungsartikels (1) gemäß der Längsrichtung (D) begleitet, wobei dieses Organ (3; 3', 10) eine erste Oberfläche (4a; 4a'), die einen mit einer Fläche des flachen Sendungsartikels (1) in Kontakt stehenden Bereich aufweist, und eine zweite reflektierende Oberfläche (4b; 4b'; 14), die im Wesentlichen parallel zu der ersten Oberfläche (4a; 4a') ist, aufweist, und
- Richten des Laserstrahls (LZ, LZ', LZ") auf den Bereich der zweiten reflektierenden Oberfläche (4b; 4b', 14), der im Wesentlichen parallel zu dem in Kontakt stehenden Bereich der ersten Oberfläche (4a; 4a') ist, sowie senkrecht zu der Längsrichtung (D) zum Messen der Dicke des flachen Sendungsartikels (1).

2. Verfahren nach Anspruch 1, bei dem der Laserstrahl (LZ, LZ', LZ") auf die zweite reflektierende Oberfläche (4b; 4b'; 14) gemäß einer im Wesentlichen senkrecht zu der Längsrichtung (D) verlaufenden Richtung gerichtet wird.

3. Vorrichtung zum Messen, durch Reflektion eines Laserstrahls, der Dicke (e) eines flachen Sendungsartikels (1), der sich in einer Sortiermaschine gemäß einer Längsrichtung (D) erstreckt und verlagert,
**dadurch gekennzeichnet,**
**dass** sie ein elastisch deformierbares Organ (3; 3', 10) umfasst, das gemäß der Längsrichtung (D) beweglich montiert ist und das die Verlagerung des Sendungsartikels (1) gemäß der Längsrichtung (D) begleitet, wobei dieses Organ (3; 3', 10) eine erste Oberfläche (4a; 4a'), die einen mit einer Fläche des flachen Sendungsartikels (1) in Kontakt stehenden Bereich aufweist, und eine zweite reflektierende Oberfläche (4b; 4b'; 14), die im Wesentlichen parallel zu der ersten Oberfläche (4a; 4a') ist, aufweist, und
**dass** sie ferner eine Laserzelle (5) umfasst zum Richten eines Laserstrahls (LZ, LZ', LZ") auf den zu dem Bereich der in Kontakt stehenden ersten Oberfläche (4a; 4a') im Wesentlichen parallelen Bereich der zweiten reflektierenden Oberfläche (4b; 4b', 14) und senkrecht zu der Längsrichtung zum Messen der Dicke des flachen Sendungsartikels (1).

4. Vorrichtung nach Anspruch 3, bei der das Organ (3; 3') ein elastisch deformierbares Rad ist, das ein mit einer Fläche des flachen Sendungsartikels (1) in Kontakt stehendes ringförmiges Abrollband (4a; 4a'), und auf der dem ringförmigen Abrollband (4a; 4a') abgekehrten Seite ein ringförmiges Reflektorband (4b; 4b'), das konzentrisch zu dem ringförmigen Abrollband (4a; 4a') ist und auf das der Laserstrahl (LZ, LZ', LZ") gerichtet ist, aufweist.

5. Vorrichtung nach Anspruch 3, bei der das Organ (3; 3') durch zwei elastisch deformierbare Räder gebildet ist, die einerseits und andererseits des Sendungsartikels angeordnet sind, wobei jedes elastisch deformierbare Rad (3; 3') ein ringförmiges Abrollband (4a; 4a') und auf der dem ringförmigen Abrollband (4a; 4a') abgekehrten Seite ein ringförmiges Reflektorband (4b; 4b'), das konzentrisch zu dem ringförmigen Abrollband (4a; 4a') ist, aufweist, wobei die ringförmigen Abrollbänder (4a; 4a') der zwei elastisch deformierbaren Räder (3; 3') jeweils in Kontakt mit den zwei einander abgekehrten Seiten des flachen Sendungsartikels (1) stehen, und bei der zwei Laserstrahlen jeweils auf die ringförmigen Reflektorbänder (4b; 4b') der beiden elastisch deformierbaren Räder (3; 3') gerichtet sind.

6. Vorrichtung nach einen der Ansprüche 4 bis 5, bei der jeder Laserstrahl (LZ, LZ', LZ") in einem knieförmigen Rohr (9; 9') geführt ist, das im Inneren Spiegel (8A; 8B) aufweist.

7. Vorrichtung nach einem der Ansprüche 4 bis 6, bei der jedes elastisch deformierbare Rad (3; 3') ein Flügelrad aus Elastomermaterial ist, und bei der das ringförmige Reflektorband (4b; 4b') des elastisch deformierbaren Rads (3; 3') sich von einer Flanke des elastisch deformierbaren Rads (3; 3') auf einem Teil der Breite des elastisch deformierbaren Rads (3; 3'), das frei von Flügeln ist, erstreckt.

8. Vorrichtung nach Anspruch 3, bei der das Organ gebildet ist durch ein Förderband (10), wobei das Förderband (10) eine Seite, die mit dem flachen Sendungsartikel (1) in Kontakt steht, und eine der mit dem flachen Sendungsartikel (1) in Kontakt stehenden Seite abgekehrte Seite (14) mit einer reflektierenden Oberfläche, auf die der Laserstrahl (LZ") gerichtet ist, aufweist.

9. Postsortiermaschine, umfassend einen Bandförderer (6, 6'), der in der Lage ist, auf einer Seite liegende flache Sendungsartikel (1) zu verlagern, und eine Vorrichtung nach einem der Ansprüche 4 bis 7, die derart angeordnet ist, dass das ringförmige Abrollband (4a; 4a') jedes elastisch deformierbaren Rads (3; 3') in Kontakt mit einem Förderband (6; 6') steht.

## Claims

1. A method of using reflection of a laser ray (LZ, LZ', LZ") for measuring the thickness (e) of a flat mail item (1) extending and moving through a sorting machine according to a longitudinal direction (D), said method being **characterized in that** it comprises the following steps:
- nipping the flat mail item (1) by means of an elastically deformable member (3; 3', 10) that is movably mounted according to said longitudinal direction (D) and that moves according to said longitudinal direction (D) with the movement of the flat mail item (1), said member (3; 3', 10) having a first surface (4a, 4a') presenting an area in contact with one face of said flat mail item (1), and a reflective second surface (4b; 4b'; 14) substantially parallel to said first surface (4a, 4a'); and
- directing the laser ray (LZ, LZ', LZ") onto the area of said reflective second surface (4b, 4b', 14) substantially parallel to said area of said first surface (4a, 4a') in contact and perpendicular to said longitudinal direction (D) for the purpose of measuring the thickness of the flat mail item (1).

2. Method according to claim 1, in which the laser ray (LZ, LZ', LZ") is directed onto said reflective second surface (4b; 4b'; 14) in a direction that is substantially perpendicular to said longitudinal direction (D).

3. Apparatus for using reflection of a laser ray for measuring the thickness (e) of a flat mail item (1) extending and moving through a sorting machine according to a longitudinal direction (D), said apparatus being **characterized in that** it comprises an elastically deformable member (3; 3', 10) that is movably mounted according to said longitudinal direction (D) and that moves according to said longitudinal direction (D) with the movement of the mail item (1), said member (3; 3', 10) having a first surface (4a, 4a') presenting an area in contact with one face of said flat mail item (1), and a reflective second surface (4b; 4b'; 14) substantially parallel to said first surface (4a, 4a'); and **in that** it further comprises a laser cell (5) for directing a laser ray (LZ, LZ', LZ") onto the area of said reflective second surface (4b, 4b', 14) substantially parallel to said area of said first surface (4a, 4a') in contact and perpendicular to said longitudinal direction (D) for the purpose of measuring the thickness of the mail item.

4. Apparatus according to claim 3, in which said member (3; 3') is an elastically deformable wheel that presents an annular tread strip (4a; 4a') in contact with one face of the flat mail item (1) and, on the side opposite from the annular tread strip (4a; 4a'), a reflective annular strip (4b, 4b') which is concentric with the annular tread strip (4a; 4a') and against which the laser ray (LZ, LZ', LZ") is directed.

5. Apparatus according to claim 3, in which said member (3, 3') is formed by two elastically deformable wheels disposed on either side of the mail item, each elastically deformable wheel (3, 3') presenting an annular tread strip (4a, 4a') and, on the side opposite from the annular tread strip (4a, 4a'), a reflective annular strip (4b, 4b') which is concentric with the annular tread strip (4a, 4a'), the annular tread strips (4a; 4a') of the two elastically deformable wheels (3, 3') being in contact with respective ones of the two opposite faces of the flat mail item (1), and in which two laser rays are directed onto respective ones of the reflective annular strips (4b, 4b') of the two elastically deformable wheels (3, 3').

6. Apparatus according to any one of claims 4 to 5, in which each laser ray (LZ, LZ', LZ") is guided in a tube (9, 9') provided with bends and provided with mirrors (8A; 8B) inside it.

7. Apparatus according to any one of claims 4 to 6, in which each elastically deformable wheel (3, 3') is a bladed wheel made of an elastomer material and in which the reflective annular strip (4b, 4b') of the elastically deformable wheel (3, 3') extends from one face of the elastically deformable wheel (3, 3') over a portion of the width of the elastically deformable wheel (3, 3') that is blade-free.

8. Apparatus according to claim 3, in which said member is formed by a conveyor belt (10), said conveyor belt (10) having one face in contact with the flat mail item (1), and, on the side opposite from the face in contact with the flat mail item (1), a face (14) with a reflective surface onto which the laser ray (LZ") is directed.

9. A postal sorting machine comprising a belt conveyor (6, 6') suitable for moving flat mail items (1) on edge, and apparatus according to any one of claims 4 to 7, disposed such that the annular tread strip (4a, 4a') of each elastically deformable wheel (3; 3') is in contact with a conveyor belt (6, 6').
